# EUROPEAN PATENT SPECIFICATION

(11) **EP 2 520 083 B1**
(45) Date of publication and mention of the grant of the patent: **02.03.2016**
(21) Application number: 10801159.4
(22) Date of filing: 20.12.2010
(51) Int. Cl.: H04N 5/445, H04N 5/44

(54) **A DISPLAY DEVICE**
ANZEIGEVORRICHTUNG
DISPOSITIF D'AFFICHAGE

(30) Priority: 31.12.2009 TR 200910082
(43) Date of publication of application: 07.11.2012
(73) Proprietor: Arçelik Anonim Sirketi, 34950 Istanbul (TR)
(72) Inventor: BERKAY, Cengiz, 34950 Istanbul (TR); ATALAY, Koray, 34950 Istanbul (TR)
(86) International application number: PCT/EP2010/070226
(87) International publication number: WO 2011/080136

(56) References cited:
- US-A1- 2006 267 726
- US-A1- 2008 244 649
- US-A1- 2009 262 256

## Description

The present invention relates to a display device which is controlled by a remote control.

In display devices, for example in televisions, generally a remote control is used during the transition between the broadcast receiver on the television and the external video/audio source connected to the television. On the said remote control, an AV (Audio/Video) button which provides to switch from the television channels to the external audio/video sources and a TV button which provides to switch from the external audio/video sources to the television receiver are provided. When the AV button is pushed, the television switches from the television channel being watched to the AV channel. By means of the AV button, the user can switch to the different sources connected to the said display device by utilizing the channels such as AV1, AV2, Scart1, Scart2, Front Av, SVHS, HDMI1, HDMI2, HDMI3, VGA, COMP. The transition process performed between these inputs can be very slow and the said channel inputs must be controlled individually. For example, in order to choose HDMI3 or VGA channel, the AV button has to be pushed seven or eight times or the user has to move up/down through the menu displayed on screen.

In the state of the art United States Patent Document No. US2008244649, a display set consisting of a television, an AV amplifier connected to the television and various devices connected to the AV amplifier is described. The AV devices connected to the system are presented to the user by means of a menu on the television screen and the user can choose the device connected to the AV input that he/she prefers.

In another state of the art document, the Japanese Patent Document No. JP10304260, the TV receiver is described, which controls whether a device is connected to any of the AV inputs and which is developed in order to choose the desired device from among the AV devices connected thereto. A similar switching between the AV inputs using a switch button is disclosed in document US2006/0267726 A1.

In another state of the art document, the Japanese Patent Document No. JP2005218002, the television receiver is described, which has more than one AV input, which distinguishes the inputs that have active signal and which facilitates the process of selecting between the devices connected to the said inputs. The AV inputs of the TV receiver are listed on the screen.

The aim of the present invention is the realization of a display device wherein the transition between the broadcast receiver thereon and the external audio/video sources connected to the television is accelerated and facilitated.

The display device realized in order to attain the aim of the present invention, explicated in the first claim and the respective claims thereof, is controlled by means of a remote control comprising an AV button. The display device comprises a receiver and a control unit in order to detect the commands of the remote control.

More than one function for the AV button of the remote control is defined in the control unit in the display device. When the said button is pushed for a short period of time, the display device is provided to switch from the television channel being watched at the moment to the last watched AV channel. When the said button is pushed for a longer period of time, a list comprising the active AV ports is displayed on the screen. The user can choose from this list the AV channel that he/she wants by means of the remote control.

In an embodiment of the present invention, the user uses the same AV button in order to return to the television channels from the AV channels. It is sufficient to push the said button while watching an AV channel in order to return to the last watched television channel. When the said button is pushed for a longer period of time, a list comprising the active AV ports is displayed on the screen. The user can choose from this list the AV channel that he/she wants by means of the remote control.

By means of the present invention, the transition from the television channel being watched to an AV channel desired to be watched and moreover from an AV channel being watched to another AV channel desired to be watched are accelerated and facilitated by using the remote control.

The display device realized in order to attain the aim of the present invention is illustrated in the attached figures, where:

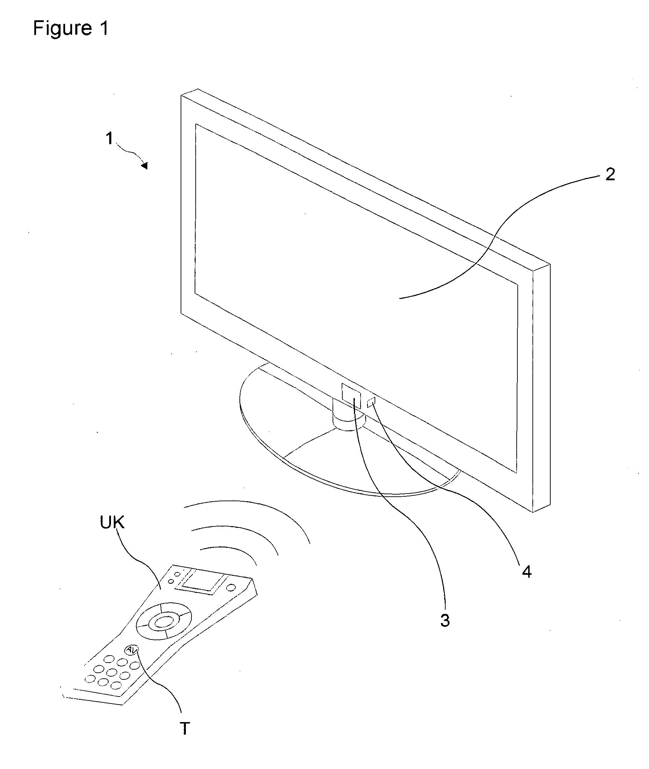

Figure 1 - is the schematic view of the display device of the present invention.
Figure 2 - is the schematic view of the display device of the present invention in an embodiment thereof wherein the AV button is pushed for the "t" time.
Figure 3 - is the schematic view of the display device of the present invention in an embodiment thereof wherein the AV button is pushed for a longer time than the "t" time.

The elements illustrated in the figures are numbered as follows:
1. Display device
2. Screen
3. Receiver
4. Control unit

The display device (1) of the present invention comprises a screen (2), a receiver (3) detecting the signals sent thereto and a control unit (4) determining the process to be performed according to the signals received.

The display device (1) is controlled by a remote control (UK). Change-channel signals are sent to the display device (1) by means of the remote control (UK). An AV button (T) is disposed on the remote control (UK).

Devices (C) such as CD/DVD player, MP3 player, satellite receiver, etc. that provide to receive audio/video from external sources are connected to the display device (1) by using one of the channels on the display device (1), such as AV1, AV2, Scart1, Scart2, Front Av, SVHS, HDMI1, HDMI2, HDMI3, VGA, COMP. The AV button (T) provides the display device (1) to project the data received from the devices (C) that provide the display device (1) to receive audio/video from external sources.

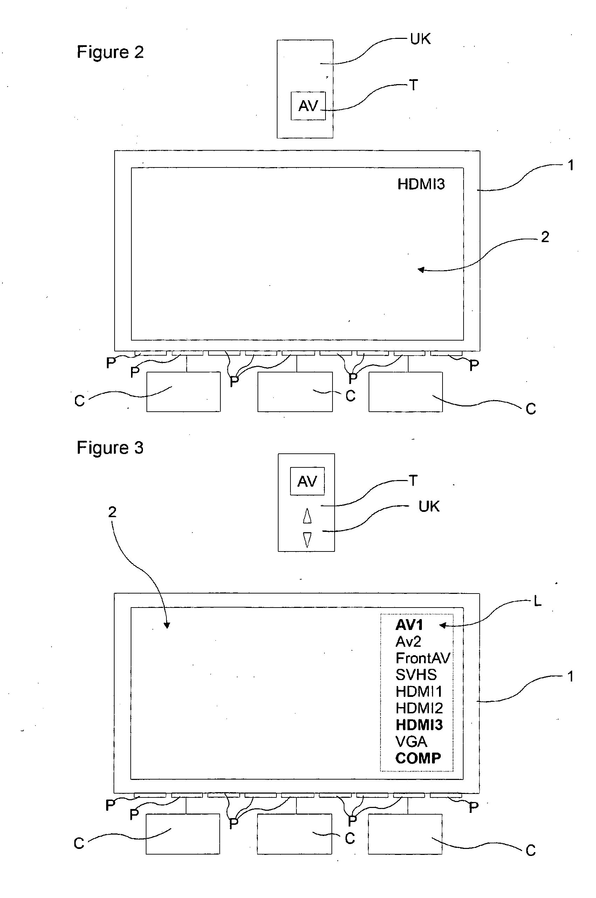

By the AV button (T) being pushed, the receiver (3) sends the signal detected thereby to the control unit (4). Which command will be produced depending on the length of the time the AV button (T) is pushed is defined in the control unit (4). When the AV button (T) is pushed for a "t" time predetermined by the producer and recorded in the control unit (4), the control unit (4) provides the display device (1) to switch from the television channel being watched to the last watched external audio and video (AV) channel (Figure 2). When the AV button (T) is pushed for a time longer than the "t" time, the AV ports (P) to the inputs of which a device (C) transmitting audio or video is connected are displayed on the screen (2) of the display device (1) (Figure 3).

In an embodiment of the present invention, when the AV button (T) is pushed for the "t" time while an AV channel is being watched on the display device (1), the control unit (4) provides the display device (1) to switch from the AV channel being watched to the television channel last watched. Consequently, by means of the same AV button (T), the user can switch from the television channels to the AV channels and also from the AV channels to the television channels. When the AV button (T) is pushed for a time longer than the "t" time, again while an AV channel is being watched, the control unit (4) displays the AV ports (P) to the inputs of which a device (C) is connected on the screen (2) of the display device (1).

In a preferred embodiment of the present invention, the AV channels (ports) to the inputs of which a device (C) is connected are displayed as a list (L) on the screen (2). The channels which are active on the said list (L) are displayed preferably in a dark color or in a different color than the other channels.

In another embodiment of the present invention, only the active channels are displayed on the said list (L). The channels are displayed on the list (L) according to a predefined order.

After the list (L) is displayed on the screen (2), the user can navigate through the active channels by moving up-down and/or right-left on the list (L) and can choose the desired active channel by means of the remote control (UK).

By means of the present invention, the transition from the television channels being watched to the AV channels desired to be watched is accelerated and facilitated. Moreover, the transition from the AV channels being watched to the other AV channels desired to be watched is also accelerated and facilitated.

It is to be understood that the present invention is not limited by the embodiments disclosed above and a person skilled in the art can easily introduce different embodiments. These should be considered within the scope of the protection postulated by the claims of the present invention.

## Claims

1. A display device (1) controlled by a remote control (UK) which provides the channel desired to be watched to be selected and whereon an AV button (T) is provided, and comprising a screen (2), a receiver (3) detecting the signals sent by the remote control (UK) and a control unit (4) determining the process to be performed according to the signals received, **characterized by** the control unit (4) which provides switching from the television channel being watched to the last watched external audio and video (AV) channel when the AV Button (T) is pushed for a "t" time predetermined by the producer and recorded in the control unit (4), and which displays the AV input ports (P) by which a device (C) transmitting audio or video is connected to the display device (2) when the AV button (T) is pushed for a time longer than the "t" time.

2. A display device (1) as in Claim 1, **characterized by** the control unit (4) which provides switching from the AV channel being watched to the last watched television channel when the AV button (T) is pushed for the "t" time while an AV channel is being watched, and which displays the AV input ports (P) by which a device (C) transmitting audio or video is connected to the display device (2) when the AV button (T) is pushed for a time longer than the "t" time.

3. A display device (1) as in Claim 1 or 2, **characterized by** the control unit (4) which displays the AV input channels by which a device (C) transmitting audio or video is connected to the display device as a list (L) on the screen (2).

4. A display device (1) as in Claim 3, **characterized by** the control unit (4) which displays the active AV channels in a dark color or in a different color on the list (L) than the other channels.

5. A display device (1) as in Claim 3, **characterized by** the control unit (4) which displays only the active AV channels on the list (L).

6. A display device (1) as in Claim 4 or 5, **characterized by** the control unit (4) which provides navigating througt the active channels by moving up-down and/or right-left on the list (L) and choosing the desired active channel by means of the remote control (UK) after the list (L) is displayed.

## Patentansprüche

1. Anzeigevorrichtung (1), die von einer Fernbedienung (UK) gesteuert wird, die es ermöglicht, dass der Kanal, der gesehen werden soll, ausgewählt wird, und an der eine AV-Taste (T) vorgesehen ist, und **umfassend** einen Bildschirm (2), einen Empfänger (3), der die Signale erkennt, die von der Fernbedienung (UK) gesendet werden, und eine Steuereinheit (4), die gemäß den empfangenen Signalen den auszuführenden Prozess bestimmt, **dadurch gekennzeichnet, dass** die Steuereinheit (4) ein Umschalten von dem derzeit betrachteten Fernsehkanal zu dem zuletzt betrachteten externen Audio- und Video(AV)-Kanal ermöglicht, wenn die AV-Taste (T) für eine vom Hersteller vorgegebene und in der Steuereinheit (4) aufgezeichnete Zeit "t" gedrückt wird, und die die AV-Eingangsanschlüsse (P) anzeigt, über die eine Vorrichtung (C), die Audio oder Video überträgt mit der Anzeigevorrichtung (1) verbunden ist, wenn die AV-Taste (T) für eine längere Zeit als die Zeit "t" gedrückt wird.

2. Anzeigevorrichtung (1) nach Anspruch 1, **dadurch gekennzeichnet, dass** die Steuereinheit (4) ein Umschalten von dem derzeit betrachteten AV-Kanal zum zuletzt betrachteten externen Audio- und Video(AV)-Kanal ermöglicht, wenn die AV-Taste (T) für die Zeit "t" gedrückt wird, während ein AV-Kanal betrachtet wird, und die die AV-Eingangsanschlüsse (P) zur Anzeigevorrichtung, über die eine Vorrichtung (C), die Audio oder Video überträgt, mit der Anzeigevorrichtung (1) verbunden ist, anzeigt, wenn die AV-Taste (T) für eine längere Zeit als die Zeit "t" gedrückt wird.

3. Anzeigevorrichtung (1) nach Anspruch 1 oder 2, **dadurch gekennzeichnet, dass** die Steuereinheit (4) die AV-Eingangskanäle, über die eine Vorrichtung (C), die Audio oder Video überträgt, mit der Anzeigevorrichtung (1) verbunden ist, als eine Liste (L) auf dem Bildschirm (2) anzeigt.

4. Anzeigevorrichtung (1) nach Anspruch 3, **dadurch gekennzeichnet, dass** die Steuereinheit (4) die aktiven AV-Kanäle in einer dunklen Farbe oder anderen Farbe in der Liste (L) anzeigt als die anderen Kanäle.

5. Anzeigevorrichtung (1) nach Anspruch 3, **dadurch gekennzeichnet, dass** die Steuereinheit (4) nur die aktiven Kanäle auf der Liste (L) anzeigt.

6. Anzeigevorrichtung (1) nach Anspruch 4 oder 5, **dadurch gekennzeichnet, dass** die Steuereinheit (4) durch Auf-/Abbewegen und/oder Rechts/Links-Bewegen in der Liste (L) ein Navigieren durch die aktiven Kanäle und ein Auswählen des gewünschten aktiven Kanals mithilfe der Fernbedienung (UK) ermöglicht, wenn die (L) angezeigt wird.

## Revendications

1. Un dispositif d'affichage (1) commandé par une télécommande (UK) qui permet la sélection d'une chaîne, que l'on veut regarder, et sur laquelle un bouton AV (T) est disposé, et **comprenant** un écran (2), un récepteur (3) qui détecte les signaux émis par la télécommande (UK) et une unité de commande (4) qui détermine le processus à exécuter selon les signaux reçus, **caractérisé par** l'unité de commande (4) qui assure que l'on passe de la chaîne de télévision, qui est en cours d'être regardée, à la dernière chaîne audio et vidéo externe (AV) étant regardée lorsque le bouton AV (T) est poussé pour un temps « t » prédéterminé par le fabricant et enregistré dans l'unité de commande (4), et qui affiche les ports d'entrée AV (P) par lesquels un dispositif (C) diffusant le matériel audio et vidéo est connecté au dispositif d'affichage (1) lorsque le bouton AV (T) est poussé pour un temps plus long que le temps « t ».

2. Un dispositif d'affichage (1) selon la Revendication 1, **caractérisé par** l'unité de commande (4) qui assure que l'on passe de la chaîne AV, qui est en cours d'être regardée, à la dernière chaîne audio et vidéo externe (AV) regardée lorsque le bouton AV (T) est poussé pour un temps « t » lorsqu'une chaîne AV est regardée, et qui affiche les ports d'entrée AV (P) par lesquels un dispositif (C) diffusant le matériel audio et vidéo est connecté au dispositif d'affichage (1) lorsque le bouton AV (T) est poussé pour un temps plus long que le temps « **t** ».

3. Un dispositif d'affichage (1) selon la Revendication 1 ou 2, **caractérisé par** l'unité de commande (4) qui affiche les ports d'entrée AV par lesquels un dispositif (C) diffusant le matériel audio et vidéo est connecté au dispositif d'affichage (1) comme une liste (L) sur l'écran (2).

4. Un dispositif d'affichage (1) selon la Revendication 3, **caractérisé par** l'unité de commande (4) qui affiche les chaînes AV actives sur la liste (L) dans une couleur foncé ou dans une couleur différente que les autres chaînes.

5. Un dispositif d'affichage (1) selon la Revendication 3, **caractérisé par** l'unité de commande (4) qui affiche seulement les chaînes AV actives sur la liste (L).

6. Un dispositif d'affichage (1) selon la Revendication 4 ou 5, **caractérisé par** l'unité de commande (4) qui assure que l'on change de chaînes actives en se déplaçant vers le haut/bas et/ou vers la droite/gauche sur la liste (L) et sélectionne la chaîne active désirée par la télécommande (UK) après que la liste (L) est affichée.
